# FASCICULE DE BREVET EUROPEEN

(11) **EP 2 477 804 B1**
(45) Date de publication et mention de la délivrance du brevet: **11.02.2015**
(21) Numéro de dépôt: 10770581.6
(22) Date de dépôt: 17.09.2010
(51) Int. Cl.: B29D 11/00, B23K 26/00, B23K 26/38, B29C 73/34

(54) **PROCEDE DE TRAITEMENT CORRECTIF D'UN DEFAUT SUR LA SURFACE D'UN COMPOSANT OPTIQUE POUR LASER DE PUISSANCE**
VERFAHREN ZUR KORRIGIERENDEN BEHANDLUNG EINES DEFEKTS AUF DER OBERFLÄCHE EINER OPTISCHEN KOMPONENTE FÜR EINEN HOCHLEISTUNGSLASER
METHOD FOR THE CORRECTIVE TREATMENT OF A DEFECT ON THE SURFACE OF AN OPTICAL COMPONENT FOR A POWER LASER

(30) Priorité: 18.09.2009 FR 0956443
(43) Date de publication de la demande: 25.07.2012
(73) Titulaire: COMMISSARIAT A L'ENERGIE ATOMIQUE ET AUX ENERGIES ALTERNATIVES, 75015 Paris (FR)
(72) Inventeur: CORMONT, Philippe, F-33110 Le Bouscat (FR); RULLIER, Jean-Luc, F-33470 Gujan Mestras (FR); GALLAIS, Laurent, F-84120 Pertuis (FR)
(74) Mandataire: Coralis Harle
(86) Numéro de dépôt international: PCT/FR2010/051939
(87) Numéro de publication internationale: WO 2011/033234

(56) Documents cités:
- JP-A- 6 016 440
- US-A1- 2008 203 326
- MENDEZ E ET AL: "LOCALIZED CO2 LASER DAMAGE REPAIR OF FUSED SILICA OPTICS", APPLIED OPTICS, OPTICAL SOCIETY OF AMERICA, US LNKD- DOI:10.1364/AO.45.005358, vol. 45, no. 21, 20 juillet 2006 (2006-07-20), pages 5358-5367, XP001245440, ISSN: 0003-6935
- PALMIER S ET AL: "Optimization of a laser mitigation process in damaged fused silica", APPLIED SURFACE SCIENCE, ELSEVIER, AMSTERDAM, NL LNKD- DOI:10.1016/J.APSUSC.2008.07.178, vol. 255, no. 10, 1 mars 2009 (2009-03-01) , pages 5532-5536, XP026001170, ISSN: 0169-4332 [extrait le 2008-08-06] cité dans la demande

## Description

La présente invention se rapporte à l'amélioration de la résistance au flux laser des composants optiques. Elle trouve une application dans le domaine de l'optique et plus particulièrement dans l'augmentation de la durée de vie des composants optiques pour lasers de puissance.

Plus précisément, l'invention vise à corriger des défauts en surface de composants optiques pour laser de puissance. Des défauts de surface peuvent être présents sur des composants neufs : défaut de polissage, impact mécanique, zone de contrainte dans le matériau lui-même. Des défauts peuvent également apparaître lors de l'utilisation de ces composants optiques sur une chaîne laser de puissance. En effet, les composants optiques des grandes chaînes lasers comme le LMJ ou le NIF sont soumis à des flux lasers importants qui provoquent des dommages puis font croître ces dommages rendant au final le composant optique inutilisable ce qui nécessite alors de le remplacer. Cependant, du fait des dimensions de ces composants optiques, un remplacement est généralement très coûteux. Dans les dernières années, on a donc vu apparaître des procédés pour limiter la formation de dommages ou pour stopper des dommages à un stade où ils sont peu développés.

Le document de brevet WO 02/098811 décrit un procédé pour réduire la densité de sites en surface d'un composant optique susceptibles d'initier des dommages lors d'une exposition à un laser de puissance. Ce procédé comprend des étapes de préparation physico-chimique de la surface (polissage mécanique, finition par fluide magnéto-rhéologique, gravure de surface à l'acide) qui permettent de réduire la densité de sites initiateurs de dommages. De plus, le procédé de WO 02/098811 comprend une dernière étape de conditionnement laser UV, consistant à soumettre le composant optique à un flux laser de fluence croissante pour améliorer la résistance des composants optique au flux laser de puissance. Néanmoins, l'étape de conditionnement laser peut révéler ou créer des dommages dont la croissance doit être stoppée. De plus le procédé décrit dans le document WO02/098811 ne permet pas de corriger des défauts induits par laser de puissance.

Le document de brevet US2002/0046998 propose une méthode pour produire des composants optique plus résistants et pour stopper la croissance de dommages (damage growth mitigation) en surface d'un composant optique. Plus précisément, on effectue un premier balayage laser pour initier l'apparition de défauts en surface d'un composant optique, puis on localise ces défauts et on applique un traitement pour stopper localement ou globalement la croissance des défauts. Une méthode pour stopper la croissance des défauts sur un composant en silice est d'appliquer un faisceau laser CO₂ pour rendre malléable localement le matériau et recuire (anneal out) le dommage résiduel. L'inconvénient du procédé de traitement par laser CO₂, tel qu'il est décrit dans US2002/0046998, est qu'il modifie la silice et ceci peut conduire à de nouveaux dommages.

La publication ("Optimization of a laser mitigation process in damaged fused silica" S. Palmier, L. Gallais, M. Commandré, P. Cormont, R. Courchinoux, L. Lamaignère, J-L Rullier, P. Legros, Applied Surface Science, 2008). doi:1016/j.apsusc.2008.07.178) montre qu'une méthode d'irradiation locale par laser CO₂ peut être efficace pour stopper la croissance des dommages dans certaines conditions d'irradiation (en fonction de la durée d'impulsion, de la puissance du laser et de la profondeur du cratère créé), mais peut aussi créer des transformations dans le matériau susceptibles de fragiliser le site du dommage.

La publication ("Mitigation of laser-damage growth in fused silica with a galvanometer scanned CO2 laser" I. L. Bass, G. M. Guss, and R. P. Hackel in Laser-Induced Damage in Optical Materials: 2005, edited by G. J. Exarhos, A. H. Guenther, K. L. Lewis, D. Ristau, M. J. Soileau, and C. J. Stolz, Vol. 5991, p. 59910C, SPIE, Bellingham, WA, 2006) montre que la présence de débris peuvent être source de nouveaux défauts et propose une méthode de passivation pour nettoyer la surface des débris. Cette passivation s'effectue par balayage d'un faisceau laser CO₂ fortement focalisé tout autour du premier cratère créé par irradiation laser. Cependant cette dernière méthode ne permet pas d'améliorer suffisamment la tenue au flux de la surface optique puisque de nouveaux dommages peuvent apparaître en périphérie de la zone passivée avec le laser CO₂.

Les transformations causées par la fusion de la silice sous l'action du laser CO₂, peuvent expliquer une tenue au flux de la zone passivée inférieure à celle d'une zone sans défaut comme cela est discuté dans l'article "Development of a Process Model for CO2 Laser Mitigation of Damage Growth in Fused Silica" M. D. Feit, AM Rubenchik, CD Bley, M. Rotter in Laser-Induced Damage in Optical Materials: 2003, edited by G. J. Exarhos, A. H. Guenther, K. L. Lewis, D. Ristau, M. J. Soileau, and C. J. Stolz, Vol. 5273,doi 10.1117/12.523867, SPIE, Bellingham, WA, 2004.

La publication "MENDEZ E ET AL: "LOCALIZED CO2 LASER DAMAGE REPAIR OF FUSED SILICA OPTICS", APPLIED OPTICS, OPTICAL SOCIETY OF AMERICA, US LNKD- DOI:10.1364/AO.45.005358,vol. 45, no. 21, 20 juillet 2006 (2006-07-20), pages 5358-5367, XP001245440,ISSN: 0003-6935" décrit le préambule de la revendication 1.

Le traitement laser des dommages à la surface d'un composant optique est intéressant pour prolonger la durée de vie de ces composants optiques puisqu'il permet de stopper la croissance des défauts sous flux laser. Cependant cette technique n'est pas bénigne pour la surface optique puisque sa tenue au flux laser est réduite par rapport à une zone vierge de la surface. A notre connaissance, aucune méthode efficace ne permet de stabiliser les dommages sans affecter la tenue au flux de la zone traitée ou passivée. La zone faible de la surface optique qui crée un dommage peut donc avoir été réparé mais la réparation génère d'autres zones faibles qui à leur tour peuvent créer des dommages à des flux lasers inférieurs à ceux auxquels les optiques sont sollicitées sur les chaînes lasers de puissance.

Le domaine de longueur d'utilisation sur une chaîne laser peut aller de l'ultraviolet (351 nm) au proche-infrarouge (1053 -1064 nm). Un traitement correctif doit donc permettre d'utiliser ultérieurement le composant optique sur toute la gamme de longueur d'onde.

Il n'existe pas actuellement de procédé de traitement permettant de corriger des défauts en surface d'un composant optique sans induire d'autres faiblesses eux-mêmes susceptibles de créer des dommages lors d'une exposition à un flux laser de puissance.

La présente invention a pour but de remédier à ces inconvénients et propose un procédé de traitement ayant pour but de corriger des défauts en surface d'un composant optique pour laser de puissance, de manière à ce que la surface après traitement soit apte à supporter un flux laser de forte puissance sans engendrer de nouveau dommage à l'emplacement des défauts traités.

Le procédé de l'invention est avantageusement un traitement optique sans contact.

Plus particulièrement, l'invention concerne un procédé de traitement correctif d'un défaut sur la surface d'un composant optique pour laser de puissance comprenant une première étape d'application d'un premier faisceau laser à une puissance P1 pendant une durée t1 de manière à générer un éclairement E₁ sur une première zone adaptée en taille et en position au défaut à corriger, le ledit premier faisceau laser ayant une longueur d'onde λ apte à être absorbée par le matériau du composant optique pour former un cratère sur la surface du composant optique. Selon l'invention, le procédé comprend une seconde étape d'application d'un second faisceau laser à une puissance P2 pendant une durée t2 sur une deuxième zone comprenant au moins la périphérie du cratère créé lors de la première étape, pour soumettre la deuxième zone à un éclairement E₂ inférieur à l'éclairement E₁.

Selon un mode de réalisation particulier du procédé de l'invention, le cratère formé sur la surface optique lors de la 1^{ère} étape est un cratère en forme de disque de diamètre φ₁ et la deuxième zone est en forme de disque ou d'anneau de diamètre extérieur φ₂ supérieur à φ₁.

Selon un mode de réalisation particulier, P1 est compris entre 1W et 10 W, E₁ est compris entre 1 kW/cm² et 10 kW/cm², t1 et t2 sont compris entre 50ms et une seconde, P2 est compris entre 5 et 20 W, E₂ est compris entre 0,5 et 5 kW/cm².

Selon un mode de réalisation, la seconde étape du procédé comprend N applications d'un éclairement E₂ constant.

Selon un aspect particulier du procédé de l'invention, la seconde étape du procédé comprend N applications d'un éclairement E₂, l'éclairement E₂ décroissant à chaque application.

Selon un mode de réalisation préféré de l'invention, dans la première étape, le faisceau laser est focalisé sur la surface optique au moyen d'un système optique et dans la seconde étape ledit système optique est défocalisé axialement par rapport à la surface optique.

Selon différents aspects particuliers de l'invention :
- la durée t2 est inférieure à la durée t1 ;
- les variations d'éclairement E₂ sont continues ;
- les variations d'éclairement E₂ sont discontinues ;
- dans la première étape, le faisceau laser est focalisé sur la surface optique au moyen d'un système optique et dans la seconde étape ledit système optique est défocalisé axialement par rapport à la surface optique ;
- la source des faisceaux laser est un laser CO₂ dont la longueur d'onde λ est de 10,6 µm ;
- le matériau du composant optique est de la silice, dopée ou non, du germanium, ou de l'alumine (Al₂O₃) ;
- le défaut est un défaut de polissage de la surface, un dommage induit par exposition à un flux laser, un défaut résultant d'un impact mécanique, ou le défaut est une zone de contrainte ou polluée.
- le procédé comprend en outre une étape de nettoyage de la surface au moyen d'une solution acide.

Cette description est donnée à titre d'exemple non limitatif fera mieux comprendre comment l'invention peut être réalisée en référence aux dessins annexés sur lesquels :
- la figure 1 représente en vue de côté (1 A) et de dessus (1 B) un défaut sur la surface d'un composant optique, défaut qui peut croître à mesure de l'exposition au faisceau laser;
- la figure 2 représente schématiquement un dispositif pour la mise en oeuvre de la 1^{ère} étape du procédé de l'invention ;
- la figure 3 représente schématiquement en vue de côté (3A) et de dessus (3B) un site de défaut après la 1^{ère} étape du procédé de l'invention;
- la figure 4 représente schématiquement un dispositif pour la mise en oeuvre de la 2^{nde} étape du procédé de l'invention ;
- la figure 5 représente schématiquement en vue de côté (5A) et de dessus (5B) un site de défaut à l'issue du procédé de traitement de l'invention.

Les composants optiques pour laser de puissance peuvent présenter lors de leur fabrication différents défauts de surface comme par exemple un défaut de polissage de la surface. Lors de l'exposition du composant optique à un flux laser de forte puissance, ce défaut peut initier des dommages beaucoup plus importants et qui augmentent en fonction de l'exposition au flux laser.

Indépendamment d'un défaut de fabrication du composant optique, lorsqu'un faisceau laser de puissance traverse ou est réfléchi par une surface optique 110 d'un composant optique 100, ce faisceau laser crée des dommages à la surface 110 du composant optique 100. Si rien n'est fait pour stopper leur croissance, les dommages peuvent augmenter en taille au fur et à mesure de l'exposition au faisceau laser de puissance. Au final, cette croissance des dommages rend le composant optique 100 inutilisable. Il est donc nécessaire de stopper la croissance des dommages pour augmenter la durée de vie des composants optiques d'une chaîne laser de puissance. Le dommage créé par le laser est alors considéré comme un défaut 120.

Nous détaillons ci-dessous un mode de réalisation préféré du procédé de l'invention.

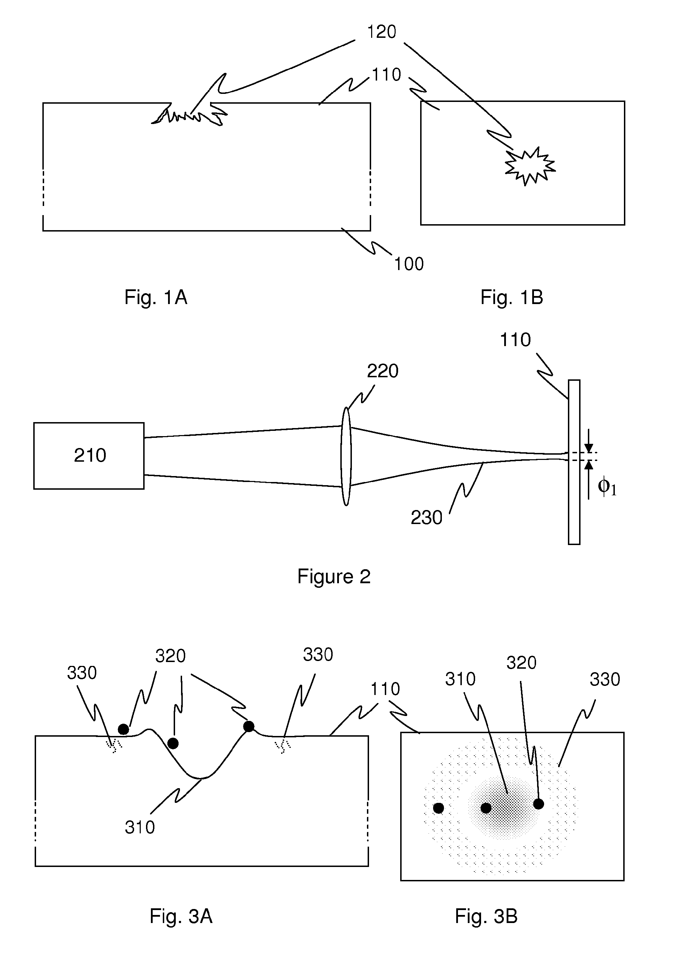

Dans une première étape, représentée schématiquement sur la figure 2, un faisceau infrarouge 230, émis par une source d'excitation 210, est focalisé à l'aide d'une lentille 220 sur le défaut 120 du composant optique 100. La source 210 est un laser CO₂ continu ou impulsionnel de fréquence de répétition de l'ordre de quelques kHz. Le matériau du composant optique 100 a la propriété d'être très peu absorbant dans le domaine de longueur d'utilisation sur chaîne laser mais est fortement absorbant pour des rayonnements dans l'infrarouge lointain comme 10,6 µm qui est la longueur d'onde d'émission de notre laser CO₂. Le faisceau laser 230 est focalisé sur la surface 110 et centré sur l'emplacement du défaut 120, avec un diamètre de faisceau φ₁ supérieur à la taille du défaut qui est de quelques dizaines à quelques centaines de micromètres sur la surface optique 110. Dans un exemple de réalisation, le diamètre φ₁ est de l'ordre de 200 µm. Le composant optique 100 absorbe fortement l'énergie du faisceau 230, s'échauffe et fond localement. Une partie de la matière est éjectée

Cette refonte locale crée un cratère 310 en lieu et place du défaut 120 (cf figure 3). Le diamètre du cratère est par exemple de ∼ 300 microns.

Cette première étape est réussie si toutes les fractures du défaut ont été refondues. Mais généralement cette première étape crée aussi des défauts en périphérie du cratère 310. Ces défauts peuvent être des débris 320 discernables par une observation au microscope ou des contraintes 330 non visibles avec des moyens d'observation classiques. Or, les zones de contrainte peuvent s'étaler dans une zone périphérique au moins égale à deux fois le diamètre du cratère.

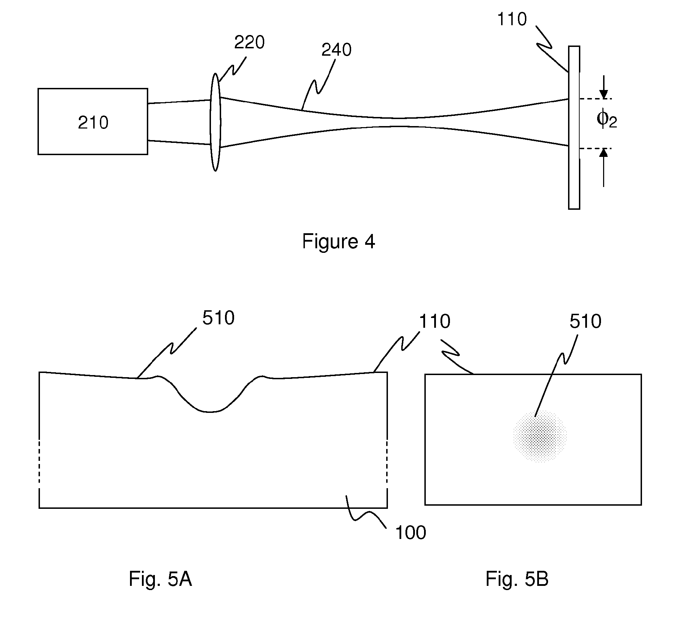

Lors de la deuxième étape de notre procédé, l'éclairement et la durée d'irradiation sont modifiés. Lors de cette deuxième étape, la lentille 220 est déplacée longitudinalement pour augmenter la taille du faisceau sur le composant optique de manière à ce que le diamètre du faisceau 240 sur la surface soit φ₂ supérieur à φ₁ tout en conservant le faisceau laser 240 centré sur l'emplacement du défaut initial 120. Sur la figure 4, qui illustre un dispositif pour réaliser la 2^{nde} étape de notre procédé, la lentille 220 est rapprochée de la source laser 210. Toutefois, la lentille 220 peut être éloignée de la source laser 210 pour conduire au même effet. L'échantillon 110 et le laser 210 restent fixes.

La zone d'interaction entre le faisceau laser 230 et le composant optique 110 est alors beaucoup plus grande (diamètre φ₂) que dans la 1^{ère} étape (diamètre φ₁). La zone d'interaction doit inclure les défauts périphériques (320, 330) créés par la première étape. La densité surfacique d'énergie du faisceau laser 240 déposée sur le composant 110 est moins élevée que celle du faisceau 230 lors de la 1^{ère} étape. Par conséquent, lors de la 2^{nde} étape, la matière du composant optique a alors une température plus faible. L'énergie apportée est suffisante pour supprimer les défauts périphériques créés lors de l'étape précédente et est de densité plus faible pour ne pas générer de nouveaux défauts.

A l'issue du procédé de l'invention, on obtient à la place du défaut initial 120 un nouveau cratère 510 qui peut être soumis à des flux lasers importants sur une chaîne laser de puissance.

Dans un exemple de réalisation, P1 est de l'ordre de 5 W, E₁ est de l'ordre de 2,2 kW/cm², t1 et t2 sont de l'ordre de la seconde, P2 est de l'ordre de 10 W, E₂ est de l'ordre de 1,2 kW/cm².

Le principal avantage du procédé de l'invention est l'amélioration de la durée de vie des composants optiques sur chaîne laser. Ce procédé permet aussi d'augmenter la puissance laser à laquelle peut être soumis le composant optique sur chaîne laser. Les autres avantages de ce procédé sont sa simplicité de mise en oeuvre et sa rapidité de réalisation.

Le procédé de l'invention permet avantageusement d'utiliser un même dispositif pour réaliser les deux étapes nécessaires à une bonne réparation : stopper la croissance des dommages puis soigner la réparation effectuée.

Dans un mode de réalisation préféré, la seconde phase du procédé consiste à appliquer un faisceau laser 240 centré au même endroit que lors le faisceau laser 230 appliqué lors de la première étape. Dans cette seconde phase, le faisceau laser 240 est alors décentré par rapport aux défauts induits (320, 330) par la 1^{ére} étape, qui sont situés en périphérie du défaut initial 120.

Comme dans les procédés décrits antérieurement, on a certes observé que la périphérie du cratère créé lors de la première étape peut être la source de nouveaux défauts 320, 330. Toutefois, selon les procédés décrits antérieurement, ces défauts secondaires étaient alors traités en recentrant un faisceau laser CO₂ très focalisé sur ces nouveaux défauts, de manière analogue à la première étape où le faisceau laser était centré sur le défaut initial. Au contraire, selon le procédé de l'invention, le faisceau laser n'est pas déplacé entre la première et la deuxième phase, mais est défocalisé tout en restant centré sur le défaut initial 120, ce qui permet d'aboutir à des résultats différents.

Une application de l'invention est la production des composants optiques pour les chaînes lasers de puissance.

Le procédé s'applique à des composants optiques dont le matériau peut être de la silice, dopée ou non, du germanium, de l'alumine (Al₂O₃).

## Revendications

1. Procédé de traitement correctif d'un défaut (120) sur la surface (110) d'un composant optique (100) pour laser de puissance comprenant une première étape :
- d'application d'un premier faisceau laser (230) à une puissance P1 pendant une durée t1 de manière à générer un éclairement E₁ sur une première zone adaptée en taille et en position au défaut (120) à corriger, le ledit premier faisceau laser (230) ayant une longueur d'onde λ apte à être absorbée par le matériau du composant optique (100) pour former un cratère sur la surface du composant optique (100),
**caractérisé en ce qu'**il comprend une seconde étape :
- d'application d'un second faisceau laser (240) à une puissance P2 pendant une durée t2 sur une deuxième zone comprenant au moins la périphérie du cratère créé lors de la première étape pour soumettre la deuxième zone à un éclairement E₂ inférieur à l'éclairement E₁.

2. Procédé selon la revendication 1 **caractérisé en ce que** le cratère formé sur la surface optique (110) lors de la 1^{ère} étape est un cratère en forme de disque de diamètre φ₁ et **en ce que** la deuxième zone est en forme de disque ou d'anneau de diamètre extérieur φ₂ supérieur à φ₁.

3. Procédé selon la revendication 1 ou 2 **caractérisé en ce que** la seconde étape comprend N applications d'un éclairement E₂ constant.

4. Procédé selon la revendication 3 **caractérisé en ce que** la seconde étape comprend N applications d'un éclairement E₂, l'éclairement E₂ décroissant à chaque application.

5. Procédé selon la revendication 2 et 3 **caractérisé en ce que** la durée t2 est inférieure à la durée t1.

6. Procédé selon l'une des revendications 3 à 5 **caractérisé en ce que** les variations d'éclairement E₂ sont discontinues entre deux applications successives.

7. Procédé selon l'une des revendications 3 à 5 **caractérisé en ce que** les variations d'éclairement E₂ sont continues entre deux applications successives.

8. Procédé de traitement selon la revendication 2 **caractérisé en ce que**, dans la première étape, le faisceau laser (230) est focalisé sur la surface optique (110) au moyen d'un système optique (220) et **en ce que** dans la seconde étape ledit système optique (220) est défocalisé axialement par rapport à la surface optique (110).

9. Procédé de traitement selon l'une des revendications 1 à 8 **caractérisé en ce que** P1 est compris entre 1W et 10W, E1 est compris entre 1 kW/cm² et 10 kW/cm², t1 et t2 sont compris entre 50ms et une seconde, P2 est compris entre 5 et 20 W, et E₂ est compris entre 0,5 et 5 kW/cm².

10. Procédé de traitement selon l'une des revendications 1 à 9 **caractérisé en ce que** la source des faisceaux laser (230, 240) est un laser CO₂ dont la longueur d'onde λ est de 10,6 µm.

11. Procédé de traitement selon l'une des revendications 1 à 10 **caractérisé en ce que** le matériau du composant optique est un matériau parmi les suivants : la silice, dopée ou non, le germanium, l'alumine (Al₂O₃).

12. Procédé de traitement selon l'une des revendications 1 à 11 **caractérisé en ce que** le défaut (120) est un défaut de polissage de la surface (110), un dommage induit par exposition à un flux laser, un défaut résultant d'un impact mécanique, ou le défaut (120) est une zone de contrainte ou polluée.

13. Procédé de traitement selon l'une des revendications 1 à 12 **caractérisé en ce qu'**il comprend en outre une étape de nettoyage de la surface (110) au moyen d'une solution acide.

## Patentansprüche

1. Verfahren zur korrigierenden Behandlung eines Defekts (120) auf der Oberfläche (110) einer optischen Komponente (100) für einen Hochleistungslaser, umfassend einen ersten Schritt:
- des Anwendens eines ersten Laserstrahls (230) mit einer Leistung P1 für eine Dauer t1, um eine Beleuchtung E₁ auf einer ersten Zone zu generieren, die größenmäßig und positionsmäßig an den zu korrigierenden Defekt (120) angepasst ist, wobei der erste Laserstrahl (230) eine Wellenlänge λ aufweist, die geeignet ist, um von dem Material der optischen Komponente (100) absorbiert zu werden, um einen Krater an der Oberfläche der optischen Komponente (100) zu bilden,
**dadurch gekennzeichnet, dass** es einen zweiten Schritt umfasst:
- des Anwendens eines zweiten Laserstrahls (240) mit einer Leistung P2 für eine Dauer t2 auf eine zweite Zone, die mindestens die Peripherie des Kraters umfasst, der in der ersten Phase entstanden ist, um die zweite Zone einer Beleuchtung E₂ auszusetzen, die geringer als die Beleuchtung E₁ ist.

2. Verfahren nach Anspruch 1, **dadurch gekennzeichnet, dass** der Krater, der auf der optischen Oberfläche (110) während des 1. Schritts gebildet wird, ein scheibenförmiger Krater mit einem Durchmesser Φ₁ ist, und dass die zweite Zone scheibenförmig oder ringförmig mit einem Außendurchmesser Φ₂ ist, der größer als Φ₁ ist.

3. Verfahren nach Anspruch 1 oder 2, **dadurch gekennzeichnet, dass** der zweite Schritt N Anwendungen einer konstanten Beleuchtung E₂ umfasst.

4. Verfahren nach Anspruch 3, **dadurch gekennzeichnet, dass** der zweite Schritt N Anwendungen einer Beleuchtung E₂ umfasst, wobei die Beleuchtung E₂ bei jeder Anwendung abnimmt.

5. Verfahren nach Anspruch 2 und 3, **dadurch gekennzeichnet, dass** die Dauer t2 kleiner als die Dauer t1 ist.

6. Verfahren nach einem der Ansprüche 3 bis 5, **dadurch gekennzeichnet, dass** die Variationen der Beleuchtung E₂ zwischen zwei aufeinanderfolgenden Anwendungen diskontinuierlich sind.

7. Verfahren nach einem der Ansprüche 3 bis 5, **dadurch gekennzeichnet, dass** die Variationen der Beleuchtung E₂ zwischen zwei aufeinanderfolgenden Anwendungen kontinuierlich sind.

8. Behandlungsverfahren nach Anspruch 2, **dadurch gekennzeichnet, dass** in dem ersten Schritt der Laserstrahl (230) auf die optische Oberfläche (110) anhand eines optischen Systems (220) fokussiert wird, und dass in dem zweiten Schritt das optische System (220) im Verhältnis zu der optischen Oberfläche (110) axial defokussiert wird.

9. Behandlungsverfahren nach einem der Ansprüche 1 bis 8, **dadurch gekennzeichnet, dass** P1 zwischen 1 W und 10 W liegt, E1 zwischen 1 kW/cm² und 10 kW/cm² liegt, t1 und t2 zwischen 50 ms und einer Sekunde liegen, P2 zwischen 5 und 20 W liegt, und E₂ zwischen 0,5 und 5 kW/cm² liegt.

10. Behandlungsverfahren nach einem der Ansprüche 1 bis 9, **dadurch gekennzeichnet, dass** die Quelle der Laserstrahlen (230, 240) ein CO₂-Laser ist, dessen Wellenlänge λ 10,6 µm beträgt.

11. Behandlungsverfahren nach einem der Ansprüche 1 bis 10, **dadurch gekennzeichnet, dass** das Material der optischen Komponente ein Material aus den folgenden ist: dotiertes oder nicht dotiertes Siliziumdioxid, Germanium, Aluminiumoxid (Al₂O₃).

12. Behandlungsverfahren nach einem der Ansprüche 1 bis 11, **dadurch gekennzeichnet, dass** der Defekt (120) ein Polierdefekt der Oberfläche (110), ein Schaden, der durch Aussetzen an einen Laserstrom hervorgerufen wird, ein Defekt, der sich aus einem mechanischen Einschlag ergibt, oder der Defekt (120) eine Spannungs- oder Verunreinigungszone ist.

13. Behandlungsverfahren nach einem der Ansprüche 1 bis 12, **dadurch gekennzeichnet, dass** es ferner einen Schritt des Reinigens der Oberfläche (110) anhand einer sauren Lösung umfasst.

## Claims

1. A method for the corrective treatment of a defect (120) on the surface (110) of an optical component (100) for a power laser, comprising a first step of:
- applying a first laser beam (230) at a power P1 for a duration t1 so as to generate an illumination E₁ on a first zone, the size and position of which are adapted to the defect (120) to be corrected, said first laser beam (230) having a wavelength λ capable of being absorbed by the material of the optical component (100), in order to form a crater on the surface of the optical component (100),
**characterized in that** it comprises a second step of:
- applying a second laser beam (240) at a power P2 for a duration t2 on a second zone comprising at least the periphery of the crater created during the first step, in order to subject the second zone to an illumination E₂ that is lower than the illumination E₁.

2. A method according to claim 1, **characterized in that** the crater formed on the optical surface (110) during the first step is a disc-shaped crater of diameter φ₁ and the second zone has the shape of a disc or a ring of outer diameter φ₂ greater than φ₁.

3. A method according to claim 1 or 2, **characterized in that** the second step comprises N applications of a constant illumination E₂.

4. A method according to claim 3, **characterized in that** the second step of the method comprises N applications of an illumination E₂, with the illumination E₂ decreasing at each application.

5. A method according to claims 2 and 3, **characterized in that** the duration t2 is lower than the duration t1.

6. A method according to one of claims 3 to 5, **characterized in that** the variations of illumination E₂ are discontinuous between two successive applications.

7. A method according to one of claims 3 to 5, **characterized in that** the variations of illumination E₂ are continuous between two successive applications.

8. A treatment method according to claim 2, **characterized in that**, in the first step, the laser beam (230) is focused on the optical surface (110) by means of an optical system (220) and **in that**, in the second step, said optical system (220) is axially defocused with respect to the optical surface (110).

9. A treatment method according to one of claims 1 to 8, **characterized in that** P1 is comprised between 1 W and 10 W, E₁ is comprised between 1 kW/cm² and 10 kW/cm², t1 and t2 are comprised between 50 ms and one second, P2 is comprised between 5 and 20 W, and E₂ is comprised between 0.5 and 5 kW/cm².

10. A treatment method according to one of claims 1 to 9, **characterized in that** the source of the laser beams (230, 240) is a CO₂ laser, the wavelength λ of which is 10.6 µm.

11. A treatment method according to one of claims 1 to 10, **characterized in that** the material of the optical component is material among the following ones: doped or undoped silica, germanium, or alumina (Al₂O₃).

12. A treatment method according to one of claims 1 to 11, **characterized in that** the defect (120) is a defect due to polishing of the surface (110), a damage induced by exposure to a laser flux, a defect resulting from a mechanical impact, or the defect (120) is a stressed or polluted zone.

13. A treatment method according to one of claims 1 to 12, **characterized in that** it further comprises a step of cleaning the surface (110) by means of an acid solution.
